# EUROPEAN PATENT APPLICATION

(11) **EP 3 521 995 A1**
(43) Date of publication of application: **07.08.2019**
(21) Application number: 16805878.2
(22) Date of filing: 03.10.2016
(51) Int. Cl.: G06F 3/06

(54) **SYSTEM AND METHOD FOR DATA SECURITY COPYING AND USE FROM ANY TERMINAL**

(71) Applicant: Still On Holidays, S.L., 33209 Gijon (Asturias) (ES)
(72) Inventor: FERNANDEZ FERNANDEZ, Bernardo, 33209 Gijon (Asturias) (ES); ANTA LOPEZ, Diego Gustavo, 33209 Gijon (Asturias) (ES)
(74) Representative: González López-Menchero, Álvaro Luis
(86) International application number: PCT/ES2016/070695
(87) International publication number: WO 2018/065637

(57) **Abstract**

A system which comprises: One or various devices (PDA (2), PC (3), smartphone (3), tablet (4), a laptop computer (6)) provided with a resident application (9) which comprises: means (10) for accessing a central server (1) and a management module (11), the system also comprises a central serve (1) provided with means (12) for accessing the information stored on the devices of the user and second means (13) for third party access or access to mirror devices (8) on which it is sought to recover the data generated and stored from the device(s) of the users. This system allows a user to store their private data securely and allows it to be available whenever the user requires it from any device with internet access.

## Description

### OBJECT OF THE INVENTION

As title of the invention states, the object of the present invention is both a system and a method for backing up private user generated from any device as well as the use of said data from any other device to which the user has access simply with the device having internet access.

The invention is characterized by the special functional characteristics of the elements which are involved and the steps of the method such that they allow all the information generated by a user to be securely stored and subsequently recovered.

Therefore, the present invention is framed within the scope of systems for storing and recovering stored data.

### BACKGROUND OF THE INVENTION

Nowadays, the mobile telephone has become an essential item for everyone. This is due to the fact that a large part of the information which we deal with on a daily basis and which is important in our life is stored in said devices. This information includes the phonebook, events and appointments calendar, photographs, videos, mobile applications acquired from a store and emails amongst other. It is increasingly more crucial to store this information securely and for it to be available whenever the user requires it.

However, the access to said information cannot be carried out automatically, it being necessary to perform action regarding the configuration of the device on which it is desired to recover the information and moreover it usually leaves a trace of the data recovered.

With the aim of providing a solution to this situation, a system for backing up private data of the user in the cloud from any device is presented without the need to modify its configuration and its use, both from their own terminal and from any other terminal to which the user has access, whether it is a mobile, tablet, desktop computer, laptop or in conclusion any device with internet access, where said access may be carried out automatically and where in addition once the application which allows data to be recovered is closed, it does not leave any trace of the data recovered on the devices which have been used.

### DESCRIPTION OF THE INVENTION

A system for backing up data generated by a user on different terminals, such as smartphones, tablets, laptop computers, PDAs, is object of the present invention.

A system which also allows the recovery of the stored data from any other device, whether it is a different smartphone, a tablet, a laptop computer, a PDA or any electronic device with internet access is also object of the invention.

A method for recording, synchronizing and subsequently recovering the data is also object of the present invention.

The system comprises the following elements:
- One or various devices provided with a resident application on the device(s) from which it is desired to have a backup of certain data. This application comprises:
   ∘ means for accessing a central server configured for sending data of the user such as phonebook, list of mobile applications installed on the terminal, emails or events and appointments, photographs, videos, for sending to the central server at least part of the extracted data and for dealing with and sending notifications to the management module of the resident application on the mobile in response to the requests made by the central server;
   ∘ a management module of the resident application on the mobile device capable of coordinating the means for accessing the central server and the private information of the user of the terminal in use. This management module carries out an analysis of the information received from the access means (in turn carrying out calculations of other variables indirectly), sending notifications to the user and sending information to the central server by way of the means for accessing the central server.
- a central server which comprises:
   ∘ means for accessing the information stored on the device(s) of the users configured for receiving at least part of the data selected by the user beforehand as critical and for sending requests for carrying out analyses or sending notifications to the means for accessing the central server;
   ∘ at least one database of the central server configured for storing the data of all the users receiving services registered on the central server and the recipient access data of the means for third party access;
   ∘ means for third party access configured for sending these third parties at least part of the data stored in a database of the central server and for sending these third parties statistical analyses and other data in response to requests sent by the third parties by way of the third party access means.
- at least one mirror device on which it is sought to recover the data generated and stored from the device(s) of the users which have been previously enabled for the transfer of information, said mirror device being provided with the previous application which allows access to the central server to send data of the user to the mirror device.

The access means may be of a very different nature. In a preferred embodiment, the access means could be a personal computer and also a PDA type mobile device, tablet or mobile telephone.

The data backup process and use from any terminal with internet access in accordance with the previously described system comprises the steps of:
- installing the application on all the devices from which it is desired to have backups of the selected data.
- activating the connectivity with a central server.
- registering the data generated by the different devices enabled for capturing data.
- installing the application on a mirror terminal
- requesting the data from a central server
- transferring the stored data generated from the different user devices enabled to capture data to the mirror device.

The resident mobile application on the mobile device of the user for generating information or on the mirror device, allows, amongst other functionalities, the following:
- User login by means of number and password
- Availability of limited space in the cloud for storing all the information which is required to be accessible from the application.
- Start screen with direct access to the data of the user (contacts, apps, photos, videos, etc.)
- The phonebook available from the application which includes direct access to the "call" option which uses the network of the terminal from which access is carried out.
- Log of calls made from the application, identifying the terminal from which the call has been made.
- Log of activity from the application, allowing it to be known at all times what information has been consulted and from which terminal this has been carried out.
- User interface design meeting the current standards of accessibility and usability
- Dumping information and updating it can be carried out either manually by the user from their mobile terminal by way of the application or by programming the application to carry this out automatically.
- Notifications sent by the application on the terminal of the user periodically in order to record the date of the last data synchronization.

The advantages of the use of the present invention are centered on providing the user themselves with a system for storing their private data securely and which can be available automatically and immediately whenever the user requires it from any device with internet access.

Another of the advantages of the present invention is that only one device with internet access is necessary which does not require installing anything beyond the resident mobile application on the device or a web browser and which is valid for all the terminals on the market.

Moreover, it is not necessary to modify the configuration of the source device or the mirror device, consequently the access to the stored data is immediate. Additionally, also owing to the system, none of the data of the user remains stored locally, either on the source device or on the mirror device such that once the user leaves the application, no trace of any kind of the data of the user remains, this having particular relevance, especially on the mirror device.

In addition, given the architecture of the system itself, the extensibility of functions is immediate, allowing linking to other existing business systems.

Unless otherwise indicated, all the technical and scientific elements used in the present specification have the meaning that is commonly understood by a person skilled in the art to which this invention belongs. In the practice of the present invention, similar methods and materials or equivalents to those described in the specification may be used.

Throughout the description and the claims, the word "comprises" and its variants do not intend to exclude other technical characteristics, additions, components or steps. Other objects, advantages and characteristics of the invention will emerge for the person skilled in the art in part from the description and in part from the practice of the invention.

### DESCRIPTION OF THE FIGURES

In order to complement the description being made and with the object of helping to better understand the characteristics of the invention, in accordance with a preferred practical embodiment thereof, said description is accompanied, as an integral part thereof, by a set of drawings where, in an illustrative and non-limiting manner, the following has been represented:
In Figure 1, we can observe a general flow diagram of the system
In Figure 2, we can observe a synchronization flow diagram of the application terminal of the user
In Figure 3, the bidirectional synchronization flow diagram is shown.

### PREFERRED EMBODIMENT OF THE INVENTION

In view of the figures, a preferred embodiment of the proposed invention is described below.

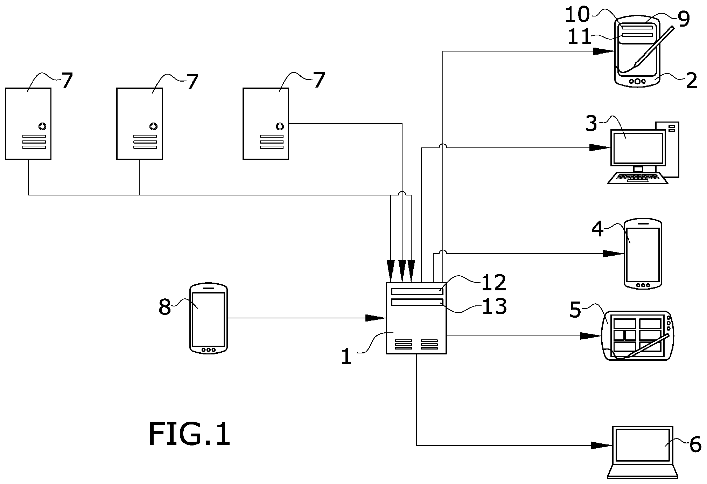

In Figure 1, we can observe a flow diagram of the elements which form part of the system which, as can be observed, comprises:
- One or various devices (PDA (2), PC (3), smartphone (3), tablet (4), a laptop computer (6)) provided with a resident application (9) on the device(s) from which it is desired to have a backup of certain generated data. This application comprises:
   ∘ means (10) for accessing a central server (1) configured for sending data of the user and for dealing with and sending notifications to the management module of the resident application on a mirror device (8) in response to the requests made by the central server (1);
   ∘ a management module (11) of the resident application on the mobile device capable of coordinating the means for accessing the central server (1) and the private information of the user of the terminal in use ((2), (3), (4), (5), (6)). This management module carries out an analysis of the information received from the access means (in turn carrying out calculations of other variables indirectly), sending notifications to the user and sending information to the central server by way of the means for accessing the central server.
- a central server (1) which comprises:
   ∘ first means (12) for accessing the information stored on the device(s) of the users configured for receiving at least part of the data selected by the user beforehand as critical and for sending requests for carrying out analyses or sending notifications to the means for accessing the central server;
   ∘ at least one database of the central server (1), capable of being served by additional servers (7), where said database is configured for storing the data of all the users receiving services registered on the central server and the recipient access data of the means for third party access;
   ∘ second means (13) for third party access or access to mirror devices (8) configured for sending these third parties at least part of the data stored in a database of the central server (1) and for sending these third parties statistical analyses and other data in response to requests sent by the third parties by way of the third party access means.
- at least one mirror device (8) on which it is sought to recover the data generated and stored from the device(s) of the users which have been previously enabled for the transfer of information, said mirror device being provided with the previous application (9) which allows access to the central server (1) to send data of the user to the mirror device.

Any electronic device which has internet access may be used as the mirror terminal.

The data capable of being stored and subsequently recovered from a mirror device could be the phonebook, list of mobile applications installed on the terminal, emails, events and appointments, photographs, videos, calls made, sent or stored messages.

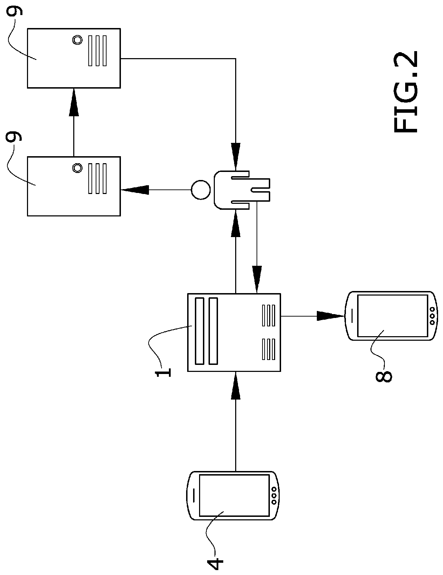

In Figure 2, the diagram for synchronizing the data in the case where a user wishes to use an application stored on the source terminal (4) from a mirror terminal (8) in which case the following steps are followed:
- making a request to the central server (1) from the mobile application (9) on the mirror terminal (8) where the name and icon of the set of applications which the user has on their terminal are sent.
- The synchronized applications are subsequently reviewed and these applications are associated with their respective locations.

With this flow, when the user accesses their account from another terminal or mirror terminal (8), they can download on this terminal the applications which they would have on their source terminal (4) by way of stored links and use their applications from other terminals, simplifying the search process and improving usability.

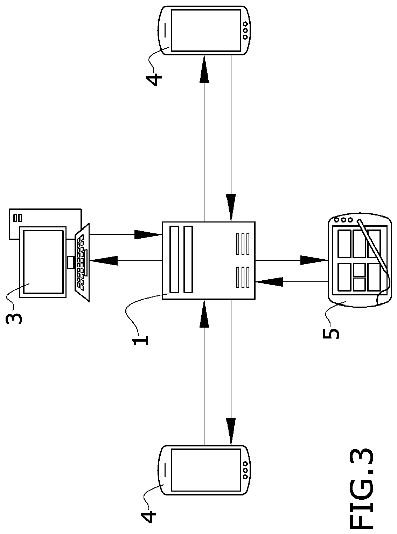

In Figure 3, the bidirectional synchronization process is shown. The information synchronized from the device of the user or mirror terminal (8) will be bidirectional or in parallel which means that it is possible to have the application initiated on various devices at the same time and these can in turn be updated and introduce new information on the server.

With the nature of the present invention sufficiently described as well as the manner of putting it into practice, it is stated that, within the scope of its essentiality, it can be carried out in practice in other embodiments that differ in detail from what is indicated by way of example and to which the protection sough also extends, provided its fundamental principle is not altered, changed or modified.

## Claims

1. A system for backing up data **characterized in that** it comprises:
- One or various devices (PDA (2), PC (3), smartphone (3), tablet (4), a laptop computer (6)) provided with a resident application (9) on the device(s) from which it is desired to have a backup of certain generated data. This application comprises:
∘ means (10) for accessing a central server (1) configured for sending data of the user and for dealing with and sending notifications to the management module of the resident application on a mirror device (8) in response to the requests made by the central server (1);
∘ a management module (11) of the resident application on the mobile device capable of coordinating the means for accessing the central server (1) and the private information of the user of the terminal in use ((2), (3), (4), (5), (6)), wherein this management module (11) carries out an analysis of the information received from the access means, sending notifications to the user and sending information to the central server by way of the means for accessing the central server.
- a central server (1) which comprises:
∘ first means (12) for accessing the information stored on the device(s) of the users configured for receiving at least part of the data selected by the user beforehand as critical and for sending requests for carrying out analyses or sending notifications to the means for accessing the central server;
∘ at least one database of the central server (1), capable of being served by additional servers (7), where said database is configured for storing the data of all the users receiving services registered on the central server and the recipient access data of the means for third party access;
∘ second means (13) for third party access or access to mirror devices (8) configured for sending these third parties at least part of the data stored in a database of the central server (1) and for sending these third parties statistical analyses and other data in response to requests sent by the third parties by way of the third party access means.
- at least one mirror device (8) on which it is sought to recover the data generated and stored from the device(s) of the users which have been previously enabled for the transfer of information, said mirror device being provided with the previous application (9) which allows access to the central server (1) to send data of the user to the mirror device.

2. The system for backing up data according to claim 1, **characterized in that** the data capable of being stored and subsequently recovered from a mirror device are any or a combination of any of the extracted data including phonebook, list of mobile applications installed on the terminal, emails, events and appointments, photographs, videos, calls made, sent or stored messages.

3. The system for backing up data according to claim 1, **characterized in that** it allows bidirectional synchronization to be carried out both from the terminal of the user or the mirror terminal (8) allowing the application to be initiated on various devices at the same time and these can in turn be updated or introduce new information on the server.

4. A process for backing up data and use from any terminal in accordance with the system of any of claims 1 to 3, **characterized in that** it comprises the steps of:
- installing the application on all the devices from which it is desired to have backups of the selected data.
- activating the connectivity with a central server.
- registering the data generated by the different devices enabled for capturing data.
- installing the application on a mirror terminal
- requesting the data from a central server
- transferring the stored data generated from the different user devices enabled to capture data to the mirror device.

## Amended claims

### Amended claims under Art. 19.1 PCT

1. A system for backing up data that comprises:
- One or various devices (PDA (2), PC (3), smartphone (3), tablet (4), a laptop computer (6)) provided with a resident application (9) on the device(s) from which it is desired to have a backup of certain generated data, and wherein this application (9) comprises:
∘ means (10) for accessing a central server (1) configured for sending data of the user and for dealing with and sending notifications to the management module of the resident application on a mirror device (8) in response to the requests made by the central server (1);
∘ a management module (11) of the resident application on the mobile device capable of coordinating the means for accessing the central server (1) and the private information of the user of the terminal in use ((2), (3), (4), (5), (6)), wherein this management module (11) carries out an analysis of the information received from the access means, sending notifications to the user and sending information to the central server by way of the means for accessing the central server;
- a central server (1) which comprises:
∘ first means (12) for accessing the information stored on the device(s) of the users configured for receiving at least part of the data selected by the user beforehand as critical and for sending requests for carrying out analyses or sending notifications to the means for accessing the central server;
∘ at least one database of the central server (1), capable of being served by additional servers (7), where said database is configured for storing the data of all the users receiving services registered on the central server and the recipient access data of the means for third party access;
and **characterized in that**:
- the central server (1) it also comprises second means (13) for third party access or access to at least one mirror device (8) for recovering the data generated and stored from the devices of the users that have been previously enabled for the transfer of information, having said mirror device (8) the application (9) which allows the connection with the central server (1); and
- wherein said second means (13) are configured for sending these third parties at least a part of the data stored in a database of the central server (1) and for sending these third parties statistical analyses and other data in response to requests sent by the third parties by way of the third-party access means.

2. The system for backing up data according to claim 1, **characterized in that** the data capable of being stored and subsequently recovered from a mirror device (8) are any or a combination of any of the extracted data including phonebook, list of mobile applications installed on the terminal, emails, events and appointments, photographs, videos, calls made, sent or stored messages.

3. The system for backing up data according to claim 1, **characterized in that** it allows bidirectional synchronization to be carried out both from the terminal of the user or the mirror device (8) allowing the application to be initiated on various devices at the same time and these can in turn be updated or introduce new information on the server.

4. A process for backing up data and use from any terminal in accordance with the system of any of claims 1 to 3, comprising the steps of:
- installing the application on all the devices from which it is desired to have backups of the selected data;
- activating the connectivity with a central server;
- registering the data generated by the different devices enabled for capturing data;
and **characterized in that** it also comprises the steps of:
- installing the application on a mirror terminal;
- requesting the data from a central server; and
- transferring the stored data generated from the different user devices enabled to capture data to the mirror device.
1. A system for backing up data that comprises:
- One or various devices (PDA (2), PC (3), smartphone (3), tablet (4), a laptop computer (6)) provided with a resident application (9) on the device(s) from which it is desired to have a backup of certain generated data, and wherein this application (9) comprises:
o means (10) for accessing a central server (1) configured for sending data of the user and for dealing with and sending notifications to the management module of the resident application on a mirror device (8) in response to the requests made by the central server (1);
o a management module (11) of the resident application on the mobile device capable of coordinating the means for accessing the central server (1) and the private information of the user of the terminal in use ((2), (3), (4), (5), (6)), wherein this management module (11) carries out an analysis of the information received from the access means, sending notifications to the user and sending information to the central server by way of the means for accessing the central server;
- a central server (1) which comprises:
o first means (12) for accessing the information stored on the device(s) of the users configured for receiving at least part of the data selected by the user beforehand as critical and for sending requests for carrying out analyses or sending notifications to the means for accessing the central server;
o at least one database of the central server (1), capable of being served by additional servers (7), where said database is configured for storing the data of all the users receiving services registered on the central server and the recipient access data of the means for third party access;
and **characterized in that**:
- the central server (1) it also comprises second means (13) for third party access or access to at least one mirror device (8) for recovering the data generated and stored from the devices of the users that have been previously enabled for the transfer of information, having said mirror device (8) the application (9) which allows the connection with the central server (1); and
- wherein said second means (13) are configured for sending these third parties at least a part of the data stored in a database of the central server (1) and for sending these third parties statistical analyses and other data in response to requests sent by the third parties by way of the third-party access means.
2. The system for backing up data according to claim 1, **characterized in that** the data capable of being stored and subsequently recovered from a mirror device (8) are any or a combination of any of the extracted data including phonebook, list of mobile applications installed on the terminal, emails, events and appointments, photographs, videos, calls made, sent or stored messages.
3. The system for backing up data according to claim 1, **characterized in that** it allows bidirectional synchronization to be carried out both from the terminal of the user or the mirror device (8) allowing the application to be initiated on various devices at the same time and these can in turn be updated or introduce new information on the server.
4. A process for backing up data and use from any terminal in accordance with the system of any of claims 1 to 3, comprising the steps of:
- installing the application on all the devices from which it is desired to have backups of the selected data;
- activating the connectivity with a central server;
- registering the data generated by the different devices enabled for capturing data;
and **characterized in that** it also comprises the steps of:
- installing the application on a mirror terminal;
- requesting the data from a central server; and
- transferring the stored data generated from the different user devices enabled to capture data to the mirror device.
